# EUROPÄISCHE PATENTANMELDUNG

(11) **EP 1 621 366 A1**
(43) Veröffentlichungstag der Anmeldung: **01.02.2006**
(21) Anmeldenummer: 05013563.1
(22) Anmeldetag: 23.06.2005
(51) Int. Cl.: B60C 23/04

(54) **Verfahren und Vorrichtung zum Zuordnen von triggerbaren Sendern eines Reifenüberwachungssystems**

(30) Priorität: 05.07.2004 DE 102004032437
(71) Anmelder: Beru Aktiengesellschaft, 71636 Ludwigsburg (DE)
(72) Erfinder: Häfele, Ulrich, 75038 Oberderdingen (DE); Braun, Mark, 75015 Bretten (DE)
(74) Vertreter: Twelmeier, Ulrich

(57) **Zusammenfassung**

Beschrieben wird ein Verfahren zum Zuordnen von triggerbaren ersten Sendern eines Reifenüberwachungssystems eines Fahrzeugs, insbesondere eines Reifendrucküberwachungssystems, welches eine Radelektronik mit je einem Meßfühler, je einen Sender und je einem Sendeantenne an jedem von N auf L Achsen (A1-A3) eines Fahrzeugs (F) gemäß einer vorbestimmten Achsformel angeordneten Rädern (R1-R6; R1-R12) hat, und welches weiterhin wenigstens eine den ersten Sendern zugeordnete Empfangsantenne (11;11a,11b) an der Karosserie des Fahrzeugs und eine an die wenigstens eine Empfangsantenne (11;11a,11b) angeschlossene Empfangs- und Auswerteelektronik aufweist, durch Zuordnen einer das einzelne Rad (R1-R6; R1-R12) kennzeichnenden Kennung zu seinem ersten Sender, durch von zweiten Sendern (7-10), welche Triggersignale aussenden, wobei die Anzahl n der im Fahrzeug angeordneten triggernden zweiten Sender (7-10) kleiner als die Anzahl A der Achspositionen (1-6) ist.

## Beschreibung

Die Erfindung betrifft ein Verfahren zum Zuordnen von triggerbaren Sendern eines Reifenüberwachungssystems für Fahrzeuge, insbesondere eines Reifendrucküberwachungssystems, mit den Merkmalen des Oberbegriffs des Patentanspruches 1 sowie eine zur Durchführung des Verfahrens geeignete Vorrichtung.

Die im Patentanspruch 1 genannte "Achsformel" gibt an, wie viele Achsen das Fahrzeug hat und wie viele Räder auf der jeweiligen Achsposition verbaut sind. Unter der "Achsposition" versteht man den Ort, an welchem einzelne Räder oder mehrere nebeneinander angeordnete, zusammengehörende Räder verbaut sind. Wenn sich an einer Achsposition nur ein einziges Rad befindet, wie es bei einem PKW die Regel ist, dann ist die Achsposition gleich der Radposition. Bei Nutzfahrzeugen können sich auf einer Achsposition jedoch mehrere Räder befinden, bei einer Zwillingsbereifung zwei Räder. In diesem Fall gibt es auf einer Achsposition zwei Radpositionen.

Ein Verfahren mit den Merkmalen des Oberbegriffs des Anspruchs 1 sowie eine Vorrichtung zur Durchführung des Verfahrens sind bekannt und werden dazu eingesetzt, die Räder eines Kraftfahrzeugs hinsichtlich bestimmter Werte wie beispielsweise des Reifendrucks, der Temperatur, usw. zu überwachen. Derartige Radüberwachungssysteme müssen in der Lage sein, automatisch die Achsposition eines Rades zu erkennen, d. h. den Verbauort eines oder mehrerer Räder an einer bestimmten Achse zu erkennen. Bei Personenkraftfahrzeugen befindet sich gewöhnlich an jeder Achsposition nur ein Rad, so dass die Achsposition gleich der Radposition des Rades ist. Bei Nutzfahrzeugen hingegen ist es der Fall, dass auf einer Achsposition bei manchen Fahrzeugen zwei Räder (Zwillingsbereifung) angebracht sind, so dass in diesem Fall einer Achsposition zwei Radpositionen zugeordnet sind.

Zur Zuordnung eines in der jeweiligen Radelektronik enthaltenen "ersten" Senders zu einer definierten Achsposition werden getriggerte Radelektroniken verwendet, die auf den Empfang eines von einem Triggersender ausgesandten Triggersignals ihre Daten aussenden.

Bei dem bekannten Verfahren und der bekannten Vorrichtung wird dabei derart vorgegangen, dass jeder Achsposition als "zweiter Sender" ein Triggersender zugeordnet ist. Die zentrale Empfangs- und Auswerteelektronik steuert während einer Lernphase die Triggersender der jeweiligen Achspositionen an, so dass die dem angesteuerten Triggersender zugeordnete Radelektronik nach Empfang des Triggersignales in einem Datentelegramm ihre Daten aussendet, welche von der mindestens einen Empfangsantenne empfangen und zur zentralen Empfangs- und Auswerteelektronik geleitet werden. Um die Herkunft dieses Datentelegramms auf Plausibilität zu überprüfen, wird dieser Vorgang vorzugsweise mehrmals wiederholt. Nach Abschluß dieses Vorgangs ist die Identität des der getriggerten Radelektronik zugeordneten Rades bekannt, d. h. seine Achsposition ist eingelemt.

Diese Vorgehensweise ermöglicht den Aufbau einer bidirektionalen Funkstrecke, mittels welcher der Sendezeitpunkt der Radelektronik vom Steuergerät aus bestimmt werden kann. Hierdurch werden die Lernzeiten des Radüberwachungssystems deutlich verringert, da bei Fahrtantritt mehrere Telegramme von jeder Radelektronik schnell hintereinander angefordert werden können und somit die zur sicheren Ermittlung der Zuordnung notwendige Anzahl von Telegrammen in einer deutlich kürzen Zeit vorliegen. Außerdem kann bei stehendem Fahrzeug die Radelektronik bei normalen Druckverhältnissen im Reifen abgeschaltet bleiben, was zur Erhöhung der Lebensdauer der Radelektronik führt.

Nachteilig bei dem bekannten Verfahren und der bekannten Vorrichtung ist jedoch, dass jeder Achsposition, d. h. jedem Einzel- oder Zwillingsrad an jeder der L Achsen des Fahrzeugs, ein eigener Triggersender zugeordnet sein muß. Dies führt in nachteiliger Art und Weise - insbesondere im Nutzfahrzeugbereich bei LKWs mit drei oder mehr als drei Achsen - zu erhöhten Kosten.

Es ist Aufgabe der vorliegenden Erfindung, ein Verfahren und eine Vorrichtung der eingangs genannten Art derart weiterzubilden, dass die Zuordnung der ersten Sender und ihrer Kennung zu einer bestimmten Achsposition mit weniger Aufwand erhältlich ist.

Diese Aufgabe wird durch ein Verfahren mit den im Patentanspruch 1 angegebenen Merkmalen und durch eine Vorrichtung zum Zuordnen von triggerbaren Sendern eines Reifenüberwachungssystems für Fahrzeuge, insbesondere eines Reifendrucküberwachungsstems mit den im Patentanspruch 8 angegebenen Merkmalen gelöst.

Durch die erfindungsgemäßen Maßnahmen wird in vorteilhafter Art und Weise erreicht, dass bei Fahrzeugen mit mindestens drei Achsen eine Zuordnung einer Radelektronik zu einer bestimmten Achsposition mit einer Anzahl von Triggersendern, welche kleiner als die Anzahl der entsprechenden Achspositionen ist, durchgeführt werden kann. Eine derartige Maßnahme erlaubt in vorteilhafter Art und Weise eine deutliche Kostensenkung.

Eine vorteilhafte Weiterbildung der Erfindung sieht vor, dass eine Pegelbewertung der von den einzelnen Radelektroniken ausgesandten Datentelegramme durchgeführt wird. Eine derartige Maßnahme besitzt den Vorteil, dass hierdurch in einfacher Art und Weise auch bei einer Mehrfachbereifung einer bestimmten Achsposition, wie es z. B. bei einer Zwillingsbereifung der Fall ist, die einzelnen Radpositionen einer Achsposition örtlich aufgelöst werden können.

Weitere Einzelheiten und Vorteile der Erfindung sind den Ausführungsbeispielen zu entnehmen, die im folgenden anhand der Figuren beschrieben werden. Es zeigen:
- Figur 1:: eine schematische Darstellung einer Vorrichtung zur Überwachung von N=6 auf L=3 Achsen verteilt angeordneten Rädern und
- Figur 2:: eine schematische Darstellung eines Ausführungsbeispiels einer Vorrichtung zur Überwachung von N=12 auf L=6 Achsen verteilt angeordneten Rädern.

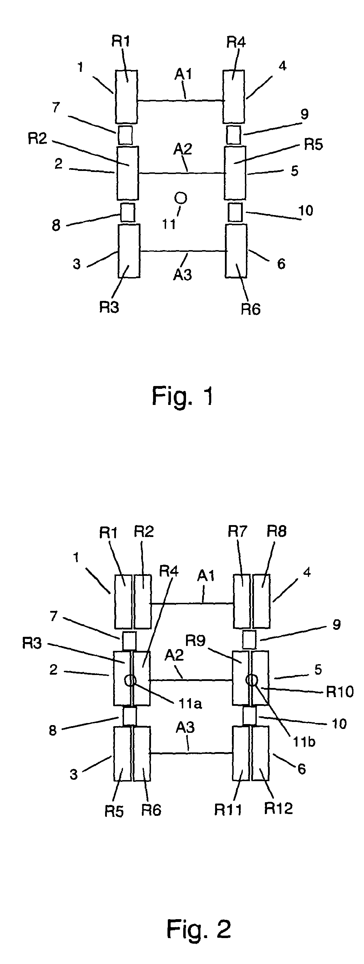

In Figur 1 ist nun schematisch eine Achs- und Räderanordnung eines Kraftfahrzeugs dargestellt, welches N=6 Räder R1 bis R6 aufweist, die auf L=3 Achsen A1-A3 verteilt angeordnet sind. Die dargestellte Achs- und Räderanordnung besitzt somit sechs Achspositionen 1-6, wobei - da keine Mehrfachbereifung vorgesehen ist - eine bestimmte Achsposition 1-6 gleich der Position der Räder R1-R6 ist, so dass bei einem konventionellen Verfahren sechs Triggersender erforderlich wären. In jedem Rad R1-R6 befindet sich eine Radelektronik, die beispielsweise den Innendruck und die Temperatur des Radreifens mißt und diese Werte - ggf. mit Zusatzdaten der Radelektronik, wie beispielsweise der Restlebensdauer, einer Kennung für den Sendemodus - mit einer individuellen Kennung der Radelektronik in einem Datentelegramm über Funk aussendet. Dazu enthält jede Radelektronik einen Sender, welcher hier als "erster" Sender bezeichnet wird. Die von den Rädern R1-R6 kommenden Funksignale werden von einer Antenne 11, ggf. von mehreren Antennen, empfangen und die von der oder den Antennen 11 empfangenen Daten werden zu einer zentralen Empfangs- und Auswerteelektronik (nicht gezeigt) geleitet, welche die empfangenen Daten auswertet. Anhand der im übertragenen Datentelegramm enthaltenen individuellen Kennung jeder Radelektronik werden die gemessenen Werte, d. h. die entsprechenden Daten der Radelektronik, einer jeweiligen Einzelradposition zugeordnet. Hierzu muß der zentralen Empfangs- und Auswerteelektronik bekannt sein, welche Radelektronik mit welcher Kennung an welcher Einzelradposition verbaut ist.

Hierzu dienen nun die Triggersender 7-10, dass sind "zweite" Sender, welche Triggersignale aussenden. Um nun zu erreichen, dass beim Trigger-Verfahren eine geringere Anzahl n von Triggersendern (hier: 4) als anzutriggende Achspositionen bzw. Radelektroniken (hier: 6) zur Durchführung des Verfahrens erforderlich ist, ist beim beschriebenen Verfahren in vorteilhafter Art und Weise vorgesehen, dass jeder der - hier - vier Triggersender 7-10 derart angeordnet ist, dass in seinem Trigger-Bereich, d. h. in dem Bereich, in dem durch Aussenden eines Triggersignals eine triggerbare Radelektronik hinreichend zuverlässig getriggert wird, x der N Achspositionen liegen, während durch einen bestimmten Triggersender 7-10 die triggerbaren Radelektroniken der außerhalb seines Trigger-Bereichs liegenden Achspositionen nicht oder nur sporadisch getriggert werden.

Bei der nachfolgenden Beschreibung wird der einfachen Erläuterung halber davon ausgegangen, dass im Trigger-Bereich eines jeden Triggersenders x=2 Achspositionen liegen. Dem Fachmann ist nun klar ersichtlich, dass das beschriebene Verfahren nicht auf den erläuterten Fall von x=2 Achspositionen beschränkt ist. Vielmehr ist es auch möglich, vorzusehen, dass der Wert x größer oder gleich 3 ist und/oder die Anzahl der einem bestimmten Triggersender 7-10 zugeordneten Achspositionen 1-6 unterschiedlich ist. Dem Fachmann sind die Modifikationen, die er dann beim Verfahren und bei der Vorrichtung vorzunehmen hat, aus nachfolgender Beschreibung der Funktionsweise der Vorrichtung und des Verfahrens für x=2 Achspositionen 1-6 innerhalb eines Trigger-Bereichs eines jeden Triggersenders 7-11 leicht ableitbar.

Im Trigger-Bereich des Triggersenders 7 liegen gemäß Fig. 1 somit die Achspositionen 1 und 2, während die Achspositionen 3-6 außerhalb seines vorstehend definierten Trigger-Bereichs liegen. In entsprechender Art und Weise liegen im Trigger-Bereich des Triggersenders 8 die Achspositionen 2 und 3, während die Achspositionen 1 und 4-6 außerhalb des Trigger-Bereichs des Triggersenders 8 liegen. Im Trigger-Bereich des dritten Triggersenders 9 liegen die Achspositionen 4 und 5, während im Trigger-Bereich des vierten Triggersenders 10 die Achspositionen 5 und 6 liegen.

Wie in der Figur 1 schematisch angedeutet, wird bei der Anordnung der Triggersender bevorzugt, dass sie möglichst mittig zwischen benachbarten Achsen A1-A3 liegen, damit die Feldstärke des vom jeweiligen Triggersender 7-10 ausgesandten Triggersignals an den Achspositionen 1-6 der benachbarten Achsen A1-A3 möglichst homogen ist. Es ist aber auch durchaus möglich, die Triggersender 7-10 außerhalb der in Figur 1 dargestellten Positionen anzuordnen, wobei aber dann gewährleistet sein muß, dass die Feldstärke der Triggersender 7-10 für eine sichere Triggerung der x vom jeweiligen Triggersender anzutriggernden Radelektroniken der an den jeweiligen Achspositionen 1-6 angeordneten Räder ausreichend ist, und dass die Feldstärke der Triggersender 7-10 an den außerhalb ihres Trigger-Bereichs liegenden Achspositionen so schwach ist, dass die außerhalb des Trigger-Bereichs liegenden Radelektroniken - wenn überhaupt - nur sporadisch angetriggert werden.

Um nun erkennen zu können, welche durch ihre Kennung individualisierte Radelektronik an welcher Achsposition 1-6 verbaut ist, werden die durch die Triggerung ausgelösten Datentelegramme ausgewertet und vorzugsweise - wie nachstehend noch eingehend beschrieben - statistisch bewertet. Diese Auswertung erlaubt dann eine Positionszuordnung der Einzelradelektroniken: Der Triggersender 7 sendet hintereinander eine Anzahl von - z. B. zehn - Triggersignalen aus. Die einzelnen Triggersignale werden von den Radelektroniken der dem Triggersender 7 benachbarten Achspositionen 1 und 2 gut empfangen, worauf die Radelektroniken der an den Achspositionen 1 und 2 montierten Räder R1 und R2 mit dem Senden eines Datentelegramms antworten. Die Achsposition 3 sowie die weitere Achspositionen 4-6 liegen außerhalb des Trigger-Bereichs des Triggersenders 7, so dass die Wahrscheinlichkeit, dass durch ein Triggersignal des Triggersenders 7 eine Radelektronik eines an den Achspositionen 3-6 angeordneten Rades R3-R6 angesprochen wird, zumindest unwahrscheinlicher ist und bestenfalls sporadisch (z. B. bei einer Optimal-Stellung der Empfangsantenne der Radelektronik zum Triggersender) auftritt.

Durch den Triggersender 7 werden somit die Radelektroniken der an den Achspositionen 1 und 2 verbauten Räder R1 und R2 getriggert, mit der Folge, dass das Antwortsignal der an den Achspositionen 1 und 2 befindlichen Radelektroniken von der Empfangsantenne 11 empfangen und zu der zentralen Empfangs- und Auswerteelektronik geleitet wird. Aufgrund der im Antwortsignal enthaltenen Kennungen der Radelektroniken und der bekannten Achsformel des Fahrzeugs, welche angibt, an welchen Achsen A1-A3 wieviel Räder R1-R6 verbaut sind, erkennt nun die zentrale Empfangs- und Auswerteelektronik, dass dem zwischen der ersten Achse A1 und der zweiten Achse A2 angeordneten Triggersender 7 die beiden Radelektroniken mit der Kennung K1 und K2 benachbart sind.

Dann wird der gleiche Verfahrensschritt mittels des weiteren Triggersenders 8 durchgeführt, mit der Folge, dass nun die an den Achspositionen 2 und 3 befindlichen Radelektroniken der Räder R2 und R3 getriggert werden, was bewirkt, dass die beiden Radelektroniken ihr Datentelegramm aussenden, das von der zentralen Antenne 11 empfangen und dann zu der zentralen Empfangs- und Auswerteelektronik geleitet wird. Diese erkennt nun aus der Achsformel, dass dem Triggersender 8 die Radelektroniken der Räder R2 und R3 benachbart sind. Die zentrale Empfangs- und Auswerteelektronik erkennt nun, dass durch die Triggersignale des einen Triggersenders 7 und des anderen Triggersenders 8 jeweils die durch eine bestimmte Kennung K1 oder K2 oder K3 individualisierte Radelektronik getriggert wird, mit der Folge, dass sich diese Radelektronik zwischen den beiden Triggersendern 7 und 8 und somit an der Achsposition 2 der zweiten Achse A2 befinden muß. Daraus folgt dann unmittelbar, dass sich die Radelektronik mit der anderen Kennung K1 an der Achsposition 1 der ersten Achse A1 und die Radelektronik mit der Kennung K3 an der Achsposition 3 der dritten Achse A3 befinden muß. Durch das beschriebene Verfahren ist es somit möglich, mit nur zwei Triggersendern 7 und 8 die Achspositionen von drei Radelektroniken und somit von drei Rädern R1-R3 zu bestimmen.

Die Positionsbestimmung der übrigen Radelektroniken erfolgt nun analog wie vorstehend beschrieben, so dass diese Verfahrensschritte nicht mehr erneut erläutert werden müssen. Durch die Verwendung von nur vier Triggersendern 7-10 ist es somit möglich, sechs Achspositionen die zugehörigen Radelektroniken zuzuordnen.

Bei der obigen Beschreibung wurde von dem Idealfall ausgegangen, dass durch einen Triggersender jeweils nur die bestimmungsgemäß vorgesehenen Radelektroniken angesprochen werden. Dieser Idealfall ist hier für den realen Betrieb oft nicht zu verwirklichen, insbesondere dann nicht, wenn sich radumdrehungsbedingt die Position der Empfangsantenne einer Radelektronik in einer Position befindet, in der die Feldstärke des Triggersenders 7-10 zu gering ist, so dass die Radelektronik auch dann nicht getriggert wird, wenn sie sich im Trigger-Bereich des Triggersenders 7-10 befindet mit der Folge, dass die Radelektronik nicht auf jedes Triggersignal mit der Aussendung eines Datentelegramms reagiert, und/oder dass durch ein von einem Triggersender 7-10 ausgesandtes Triggersignal eine außerhalb seines Trigger-Bereichs liegende Radelektronik getriggert wird. Um nun auch unter diesen nicht idealtypischen Verhältnissen das vorstehend anhand seines Idealfalls beschriebene Verfahren durchführen zu können, ist vorgesehen, dass die empfangenen Datentelegramme statistisch bewertet werden und eine Radelektronik nur dann als benachbart zu einem bestimmten Triggersender 7-10 und somit in dessen Trigger-Bereich liegend betrachtet wird, wenn die Anzahl der Datentelegramme, die von t Triggersignalen ausgelöst werden, über einen bestimmten Wert liegt, z. B., dass bei t=10 Triggersignalen mindestens y=6 Datentelegramme, welche die Kennung ein - und - derselben Radelektronik enthalten, empfangen werden, oder dass vorgesehen ist, dass nur die beiden (oder allgemein: die x) Kennungen, die am häufigsten empfangen werden, als die Kennungen der zum jeweiligen Triggersender 7-10 benachbarten Radelektroniken aufgefaßt werden.

In Figur 2 ist ein zweites Ausführungsbeispiel einer Vorrichtung zur Reifenüberwachung dargestellt, bei dem beim Fahrzeug auf L=3 Achsen verteilt an sechs Achspositionen 1-6, N=12 Räder R1-R6 und R7-R12 angeordnet sind, d. h., dass an jeder Achsposition 1-6 zwei Einzelradpositionen vorhanden sind. Außerdem ist bei dem zweiten Ausführungsbeispiel vorgesehen, dass zwei Empfangsantennen 11a und 11 b zum Empfang der von den Radelektroniken abgesandten Datentelegramme vorgesehen sind. Des weiteren sind wieder vier vorzugsweise mittig zwischen den Achsen A1-A3 angeordneten Triggersender 7-10 vorhanden.

Im Bereich des Triggersenders 7 liegen somit die Radelektroniken der ersten Räder R1 und R2 der ersten Achsposition 1 und die Räder R3, R4 der zweiten Achsposition 2. Im Trigger-Bereich des Triggersenders 8 liegen die Räder R3 und R4 der zweiten Achsposition 2 und die Räder R5 und R6 der dritten Achsposition 3, im Trigger-Bereich des Triggersenders 9 liegen die Räder R7, R8 der vierten Achsposition 4 und die Räder R9, R10 der fünften Achsposition 5 und im Trigger-Bereich des Triggersenders 10 liegen die Räder R9, R10 der fünften Achsposition und die Räder R11 und R12 der sechsten Achsposition.

Das zweite Ausführungsbeispiel unterscheidet sich also von dem ersten Ausführungsbeispiel hinsichtlich seiner Ausgangssituation - bedingt durch eine Zwillingsbereifung auf den Achspositionen 1-6 - dadurch, dass im Bereich eines Triggersenders 7-10 nun nicht mehr x=2, sondern x=4 Räder R1-R12 mit ihren entsprechenden Radelektroniken angeordnet sind, d. h., an einer bestimmten Achsposition sind beim zweiten Ausführungsbeispiel jeweils zwei Räder R1 und R2, R3 und R4, R5 und R6, etc. positioniert.

Durch eine dem ersten Ausführungsbeispiel entsprechende Vorgehensweise ermöglicht es das beschriebene Verfahren nun festzustellen, welches Räder-Paar an einer bestimmten Achsposition 1-6 angeordnet ist. Um nun innerhalb einer bestimmten Achsposition 1-6 außerdem die beiden Räder, nämlich das jeweils äußere und innere Rad, voneinander unterscheiden zu können, ist weiterhin vorgesehen, dass eine Auswertung des Signalpegels der jeweiligen Datentelegramme der Radelektroniken der sich an einer Achsposition 1-6 befindlichen Räder R1-R12 durchgeführt wird. Vorzugsweise ist vorgesehen, dass Radelektroniken, die gleichzeitig getriggert werden, ihre Datensignale auf diese Sendeaufforderung nicht gleichzeitig, sondern mit einer Zeitverzögerung, die variabel sein kann, senden, wodurch eine zeitliche Überlappung der Datentelegramme ausgeschlossen wird. Die Pegelbewertung der empfangenen Datensignale findet in der zentralen Empfangs- und Auswerteelektronik statt, die die Signale der Antennen 11a und 11 b auswertet. Das Datentelegramm eines von der Antenne 11a bzw. 11 b weiter entfernten Rades, z. B. des Rades R1 der ersten Achsposition 1, wird schwächer empfangen als dasjenige der näher liegenden Radelektronik, z. B. der Radelektronik des Rades R2 der ersten Achsposition 1. Bei einer Zwillingsbereifung, bei der sich die beiden Zwillingsräder z. B. die beiden Räder R1 und R2 mit ihren Seitenwänden gegenüber stehen, behindert und dämpft das innere Rad R2 die Übermittlung der Datentelegramme der Radelektronik des äußeren Rades R1 zur Antenne 11b auf der gegenüberliegenden Seite des Fahrzeuges, sodass anhand der Intensität der von der Antenne 11b empfangenen, von den Rädern R1 und R2 kommenden Räder zwischen den Rädern R1 und R2 unterschieden werden kann.

Zusammenfassend ist festzuhalten, dass es das beschriebene Verfahren und die beschriebene Vorrichtung in vorteilhafter Art und Weise erlauben, die Achspositionen und - bei einer Pegelbewertung - auch die Radposition von N auf L Achsen A1-A3 aufgeteilten Rädern R1-R12 zu erkennen, und zwar mit einer Anzahl von Triggersendern, welche kleiner als die Anzahl der entsprechenden Achspositionen ist. Die verringerte Anzahl von erforderlichen Triggersendern erlaubt in vorteilhafter Art und Weise eine deutliche Kostensenkung.

## Patentansprüche

1. Verfahren zum Zuordnen von triggerbaren ersten Sendern eines Reifenüberwachungssystems eines Fahrzeugs, insbesondere eines Reifendrucküberwachungssystems,
welches eine Radelektronik mit je einem Meßfühler, je einen Sender und je einem Sendeantenne an jedem von N auf L Achsen (A1-A3) eines Fahrzeugs (F) gemäß einer vorbestimmten Achsformel angeordneten Rädern (R1-R6; R1-R12) hat,
und welches weiterhin wenigstens eine den ersten Sendern zugeordnete Empfangsantenne (11; 11a, 11b) an der Karosserie des Fahrzeugs und eine an die wenigstens eine Empfangsantenne (11; 11a, 11b) angeschlossene Empfangs- und Auswerteelektronik aufweist,
durch Zuordnen einer das einzelne Rad (R1-R6; R1-R12) kennzeichnenden Kennung zu seinem ersten Sender,
durch von zweiten Sendern (7-10), welche Triggersignale aussenden, getriggerte Aussendung von die Kennung enthaltenden Datentelegrammen und Weiterleiten dieser Datentelegramme an die zentrale Empfangs- und Auswerteelektronik,
**dadurch gekennzeichnet, dass** die Anzahl n der im Fahrzeug angeordneten triggernden zweiten Sender (7-10) kleiner als die Anzahl A der Achspositionen (1-6) ist,
dass eine jede Achsposition (1-6) des Fahrzeugs mindestens einem Trigger-Bereich eines der n zweiten triggernden Sender (7-10) zugeordnet wird,
dass die zweiten Sender (7-10) derart angeordnet und/oder ausgebildet werden, dass mindestens eine Achsposition (1-6) jeweils dem Trigger-Bereich von mindestens zwei triggernden zweiten Sendern (7-10) zugeordnet wird,
dass die Kennungen der auf ein Triggersignal eines bestimmten zweiten triggernden Senders (7-10) antwortenden Radelektroniken von der wenigstens einen Empfangsantenne (11; 11a, 11b) registriert und zur Empfangs- und Auswerteelektronik geleitet werden,
und dass die Auswerteelektronik daraus unter Berücksichtigung der Achsformel des Fahrzeugs die Achsposition (1-6) einer bestimmten Radelektronik berechnet.

2. Verfahren nach Anspruch 1, **dadurch gekennzeichnet, dass** der Trigger-Bereich eines jeden triggernden zweiten Senders (7-10) derart festgelegt wird, dass im Trigger-Bereich eine Anzahl von x Achspositionen (1-6) angeordnet ist.

3. Verfahren nach Anspruch 2, **dadurch gekennzeichnet, dass** im Trigger-Bereich eines jeden zweiten Senders (7-10) die gleiche Anzahl von Achspositionen (1-6) vorgesehen ist.

4. Verfahren nach einem der vorangehenden Ansprüche, **dadurch gekennzeichnet, dass** die zweiten Sender (7-10) im wesentlichen mittig zwischen benachbarten Achsen (A1-A3) des Fahrzeugs angeordnet werden.

5. Verfahren nach einem der vorangehenden Ansprüche, **dadurch gekennzeichnet, dass** die durch einen zweiten Sender (7-10) getriggerten Datentelegramme statistisch bewertet werden.

6. Verfahren nach einem der vorangehenden Ansprüche, **dadurch gekennzeichnet, dass** eine Pegelbewertung der Datentelegramme durchgeführt wird.

7. Verfahren nach einem der vorangehenden Ansprüche, **dadurch gekennzeichnet, dass** im Datentelegramm als überwachte Meßgröße der Reifeninnendruck und/oder die Reifentemperatur enthalten ist.

8. Vorrichtung zum Zuordnen von triggerbaren ersten Sendern eines Reifenüberwachungssystems für Fahrzeuge, insbesondere eines Reifendrucküberwachungssystems,
welches Radelektroniken mit je einem Meßfühler, je einem Sender und je einer Senderantenne für jedes von N auf L Achsen eines Fahrzeugs gemäß einer vorbestimmten Achsformel angeordneten Rädern (R1-R6) hat,
und welches weiterhin wenigstens eine den ersten Sendern zugeordnete Empfangsantenne (11; 11a, 11b) an der Karosserie des Fahrzeugs und eine an die wenigstens eine Empfangsantenne (11; 11a, 11b) angeschlossene Empfangs- und Auswerteelektronik aufweist,
wobei durch Zuordnen einer das einzelne Rad kennzeichnenden Kennung zu seinem ersten Sender, und durch zweite Sender (7-10) der Vorrichtung (1), welche Triggersignale aussenden und **dadurch** die ersten Sender zum Aussenen von die Kennung enthaltenden Datentelegrammen veranlassen, sowie durch Weiterleiten dieser Datentelegramme an die zentrale Empfangs- und Auswerteelektronik die Zuordnung der triggerbaren ersten Sender zu einer definierten Achsposition (1-6) des Fahrzeugs durchgeführt wird,
**dadurch gekennzeichnet, dass** die zweiten Sender (7-10), welche Triggersignale aussenden, derart angeordnet und/oder ausgebildet sind, dass im Trigger-Bereich eines jeden zweiten Senders (7-10) mindestens eine Achsposition (1-6) angeordnet ist,
dass mindestens eine Achsposition (1-6) jeweils dem Trigger-Bereich von mindestens zwei zweiten Sendern (7-10) zugeordnet ist,
und dass die Auswerteelektronik aus den empfangenen, durch Triggerung ausgelösten Signalen von den ersten Sendern unter Berücksichtigung der Achsformel des Fahrzeugs die Achsposition (1-6) einer bestimmten Radelektronik berechnet, indem sie die Kennungen der auf die Triggersignale eines bestimmten zweiten Senders (7-10) antwortenden Radelektroniken auswertet.

9. Vorrichtung nach Anspruch 8, **dadurch gekennzeichnet, dass** in der Empfangs- und Auswerteelektronik eine Pegelbewertung der von den Radelektroniken ausgesandten Datentelegramme durchführbar ist.
